# EUROPEAN PATENT SPECIFICATION

(11) **EP 2 763 831 B1**
(45) Date of publication and mention of the grant of the patent: **08.11.2017**
(21) Application number: 12775392.9
(22) Date of filing: 28.09.2012
(51) Int. Cl.: B29C 43/18, B29C 33/76, B29C 33/14, B29C 43/36, B29C 51/08

(54) **COMPRESSION OVERMOLDING PROCESS AND DEVICE THEREFOR**
VERFAHREN ZUR HINTERPRESSFORMUNG UND VORRICHTUNG DAFÜR
PROCÉDÉ DE SURMOULAGE PAR COMPRESSION ET DISPOSITIF ASSOCIÉ

(30) Priority: 04.10.2011 US 201161542847 P
(43) Date of publication of application: 13.08.2014
(73) Proprietor: E. I. du Pont de Nemours and Company, Wilmington, DE 19898 (US)
(72) Inventor: WAKEMAN, Martyn Douglas, 1196 Gland (CH)
(74) Representative: Gritschneder, Sebastian
(86) International application number: PCT/US2012/057975
(87) International publication number: WO 2013/052378

(56) References cited:
- DE-A1- 4 305 200
- US-A- 4 614 558
- US-A- 5 429 786
- US-A1- 2004 169 396
- US-A1- 2008 264 555
- DATABASE WPI Week 199623 Thomson Scientific, London, GB; AN 1996-224639 XP002692702, -& JP 8 085124 A (ARACO KK) 2 April 1996 (1996-04-02)

## Description

### Field of the Invention

This invention relates to a process of overmolding a part, in particular a process of compression overmolding of composite materials, and a die tool therefor. The invention also relates to parts made by compression overmolding.

### Background of the Invention

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed forming parts from fibrous material with a polymer matrix to optimize the properties of the composite structure. In highly demanding applications, such as structural parts in automotive and aerospace applications, composite materials are desired due to a unique combination of lightweight, high strength and temperature resistance. High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure, that a reduced time is needed to make the composite structures because no curing step is required, and their increased potential for recycling. Indeed, the time consuming chemical reaction of cross-linking for thermosetting resins (curing) is not required during the processing of thermoplastics. Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy

In compression overmolding, overmolding material is placed on a part to be overmolded and a die tool is closed, thus compressing the overmold material over the part and such that it conforms to the shape of the compression die. Compression overmolding is suited in particular for large parts and also parts that are thin, where the material to be overmolded could be made from either formed or flat sheets or bars of materials including formed sheets of plastic, thermoplastic composite sheet or fibrous battings, unidirectional composite materials, or metal. Optionally the sheet or formed sheet to be over-molded is compatible or compatibilized with the over-molding material such that a good bond occurs. An advantage of compression overmolding compared to injection molding, is that the material to be overmolded is more readily positioned in the mold die (where it is located by gravity and any additional locational devices), as opposed to injection molding where the material to be over-molded is held in position solely by additional locational devices. A further and desired advantage of over-compression molding is that any fibers present in the overmolding material are subject to less breakage and have increased mean fiber lengths compared with the fiber length reduction that occurs during feed of pre-compounded fibrous/polymer pellets into a screw-based heating process or at injection gates or in hot runner systems, thus improving the structural strength and notably the impact performance of the overmolded product. Parts may thus be overmolded with material containing fibers that are significantly longer than in a conventional injection molding process.

In a conventional over-compression molding process, the over-molding material and the sheet of the material to be over-molded are positioned on a base die, and a moving compression die is pressed down against the materials which, under pressure, causes the over-molding material to flow laterally.

Molding of thermoplastic composites typically use die sets having a shear edge to stop flow of the material and hence define the part geometry, while allowing air in the mold to escape, and the composite material (not the mold or mold stops) to be pressurised during cooling. The overmold material will hence flow to the die shear edge and cover the entire surface of the sheet. A drawback is that over-mold material covers the entire surface of the sheet material and cannot be applied as localized ribbing or other functional structures, hence increasing the weight of the part and the associated cost.

Document DE-A-43 05 200 discloses moulding foam material between a carrier and a preform, wherein mould cores shield the preform in the mould cavity against foam material flow.

### Summary of the Invention

It is an object of the invention to provide a compression overmolding process, and a compression overmolding die tool therefor, that enables economical production of compression overmolded parts.

It is another object of this invention to provide a compression overmolding process and a die tool therefor, that enables production of parts with reduced material usage and reduced weight yet that are structurally strong and reliable.

It is advantageous to provide a compression overmolding process and a die tool therefor that is easy to implement.

It is advantageous to provide a compression overmolded part that is light and strong and economical to produce.

It is advantageous to provide a compression overmolding process and a die tool therefor that reduces wear of the tool.

It is advantageous to provide a compression overmolding process and a die tool therefor that reduces or avoids material waste.

Objects of this invention have been achieved by providing a compression overmolding process according to claim 1, a compression overmolded part according to claim 9 and a compression overmold die tool according to claim 13. Preferred embodiments are disclosed in the dependent claims. Disclosed herein is a compression overmold die tool comprising a base die and a counter compression die mountable in a machine operable to move the dies towards and away from each other, the base die and counter compression die each having surfaces configured to receive a base element therebetween and to form a shape of an overmold material by compression overmolding on the base element. The compression overmold die tool further comprises at least one active core mounted in a body of at least one of the base die and counter compression die, the at least one active core relatively movable with respect to said body and configured and operable to be pressed against said base element prior to full closing of the compression overmold die tool to define at least one non-overmold surface portion on the base element.

The compression overmold die tool may comprise a plurality of active cores which may be rigidly interconnected and configured to be moved simultaneously, or independently movable.

In an embodiment, the at least one active core is mounted in the counter compression die.

Each active core comprises a clamping surface configured to be pressed at least around a peripheral portion of a corresponding said non-overmold surface portion so as to sealingly encircle or cover the non-overmold surface portion when pressed against the base element of the part to be overmolded. The clamping surface may be a flat clamping surface or may have a non-flat three-dimensional shape conforming to a non-flat surface portion of the part to be overmolded.

The active core may further be configured to be utilized as an ejector for removing an overmolded part from the die after opening the compression overmold die tool.

Also disclosed herein is a compression overmold process comprising the steps of:
placing a base element with overmold material positioned thereon in a base die of a compression die tool;
moving a counter compression die of the compression die tool towards the base die; prior to fully closing the compression die tool to form a shape of the overmold material by compression overmolding on the base element, moving at least one active core comprising a clamping surface relative to a body of at least one of said base die and counter compression die until said clamping surface presses against a non-overmold surface portion on said base element; and
subsequently fully closing the counter compression die while maintaining said clamping surface pressing against said non-overmold surface portion.

Prior to placing the base element in the base die, the base element may be thermally preformed by draping a thermally softened sheet of polymeric material in a preform die. In a later step, the overmold material is placed, deposited or poured at least partially on overmold surface portions of the preformed base element and bonded or fixed on the preformed base element.

It is advantageous to place the two materials together, at a temperature above the polymer melting point in the case of thermoplastic materials, before positioning in the compression overmold die. In an embodiment, the base element and overmold materials could be placed respectively from the over-molding material extruder and sheet heater using a robot and needle grippers.

In a variant, the overmold material may be placed on the underside of the base element and thus compressed against the base die. The base element, which in various embodiments may be in the form of a thin sheet, can either be supplied preformed to the die shape or roughly to the die shape in a separate preceding preforming operation, or in a variant may be formed by the pressure of the flowing overmold material and closing die, which can reduce cost by eliminating the sheet pre-forming step.

In an embodiment where the sheet material is supplied preformed to the die shape, either as a local insert or with coverage of the whole die surface, the sheet preferably fits inside the tool shear edge.

In an embodiment where the initially flat sheet material is formed in the compression overmold die, the unfolded or undraped part dimension is greater than the projected part dimension and is heated to above the softening temperature, which for thermoplastic composites is preferably above the sheet polymer melt temperature, and a transport system such as a needle gripper system may advantageously be used to transport the sheet as well as to preshape the sheet prior to placing on the base die of the compression overmold die tool.

Prior or after placing the base element in the base die but prior to moving the counter compression die of the compression die tool towards the base die, a metal insert, such as a sheet metal frame, may be placed on the base die or the base element for integration in the final part.

Also disclosed herein is a compression overmolded part made by compression overmolding an overmold material on a base element, wherein the compression overmold part comprises non-overmold surface portions surrounded by overmolded surface portions.

In an embodiment, the compression overmolded part base element comprises a sheet of thermally preformed polymer material.

In an embodiment, the compression overmolded part overmold material comprises a polymeric material containing fibers.

In an embodiment, the compression overmolded part comprises an insert of metal material at least partially fixed to the base element by the overmold material. In an embodiment, the insert comprises a frame positioned at or proximate an edge of the base element.

Further objects and advantageous aspects of the invention will be apparent from the claims, and from the following detailed description and accompanying figures.

### Brief Description of the drawings

Fig. 1 is a simplified schematic cross-sectional view of a die tool for compression overmolding, according to an embodiment of this invention;
Fig. 2a is a schematic cross-sectional view of an example of a part made by a compression overmolding process, according to an embodiment of this invention, the example representing a wheel well for an automobile.
Fig. 2b is a detailed schematic view of an edge portion of the part of Fig. 2a;
Figs. 3a to 3g schematically illustrate various steps of a compression overmolding process according to an embodiment of this invention, in which

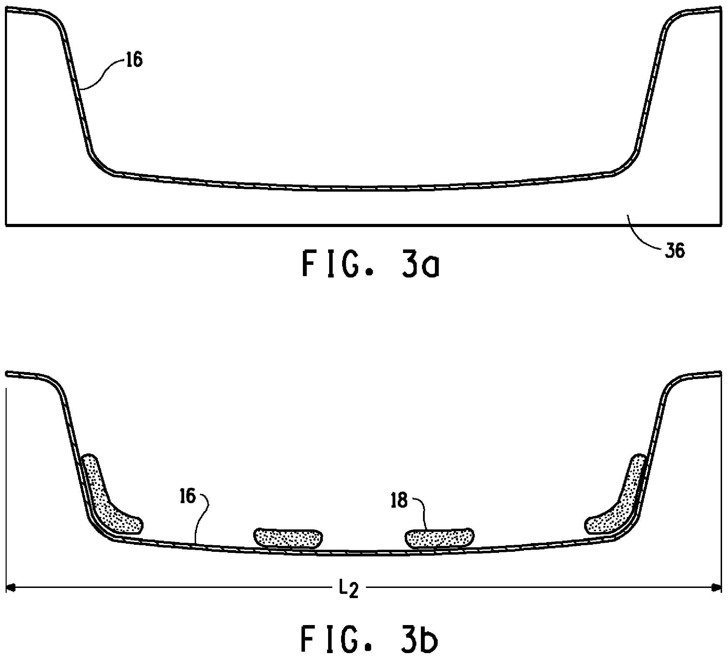

Fig. 3a schematically illustrates a pre-forming step of a sheet of material to be overmolded;
Fig. 3b schematically illustrates the pre-formed sheet with overmold material positioned on a surface thereof;

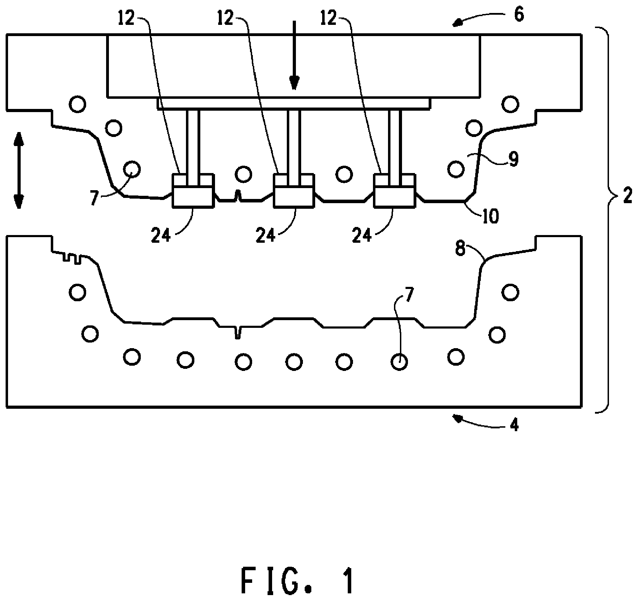

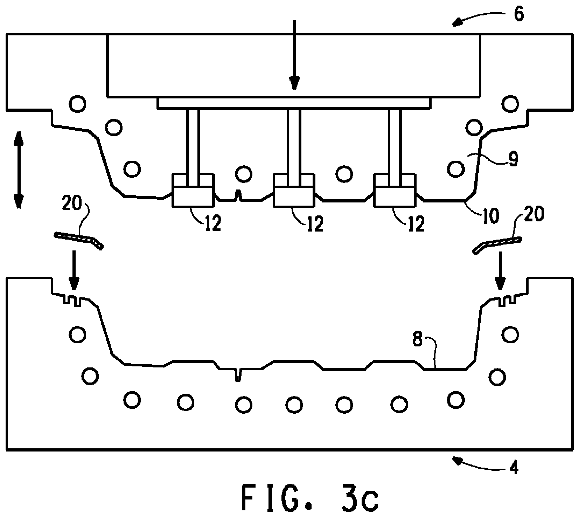

Fig. 3c schematically illustrates the die tool according to Fig. 1 in a first step where an insert is being positioned on a base die;

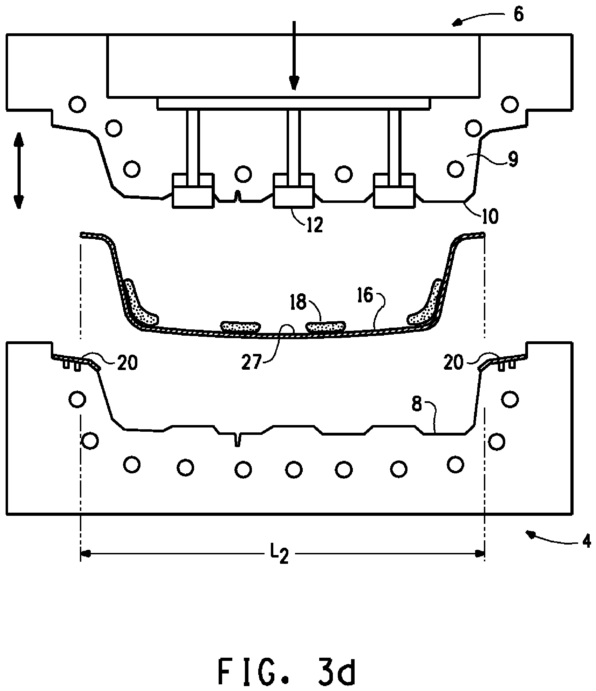

Fig. 3d schematically illustrates a later step in which the pre-formed part is positioned in the die tool;

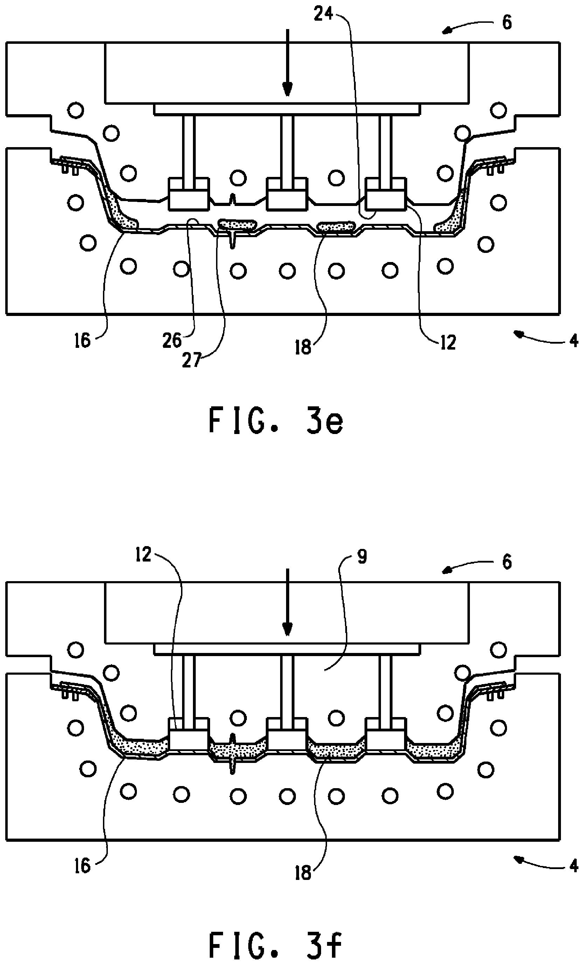

Fig. 3e shows a later step in which the die tool is in the process of being closed;
Fig. 3f shows a later step in which active cores of the die tool clamp the part to be overmolded;

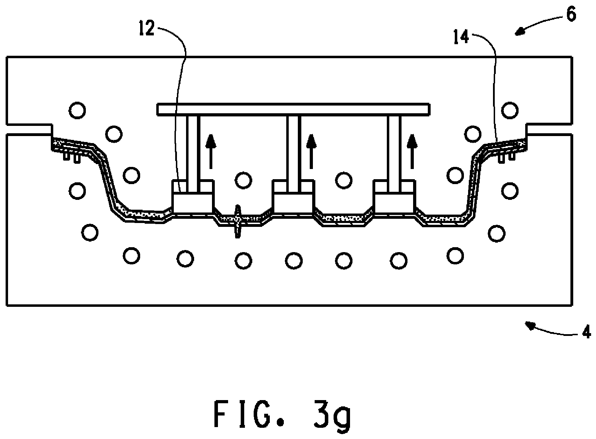

Fig. 3g schematically illustrates the final compression step in which the die is fully closed;

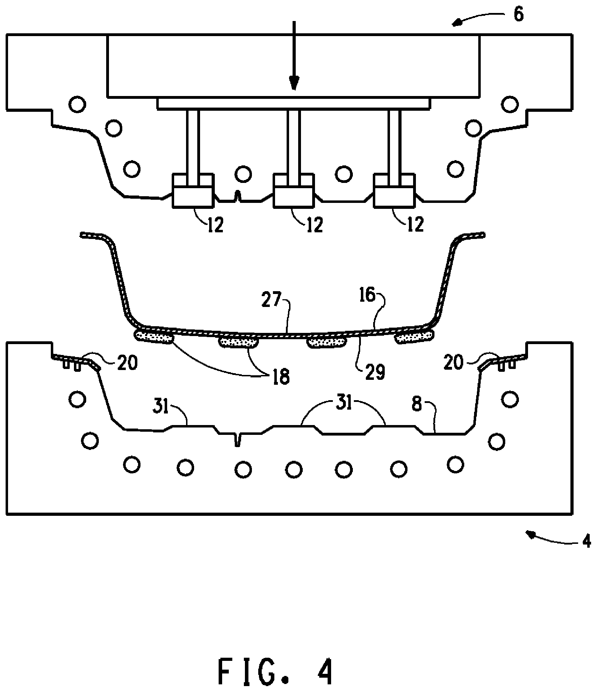

Fig. 4 schematically illustrates a die tool and a pre-formed sheet with overmold material on a surface thereof according to a variant of the invention;

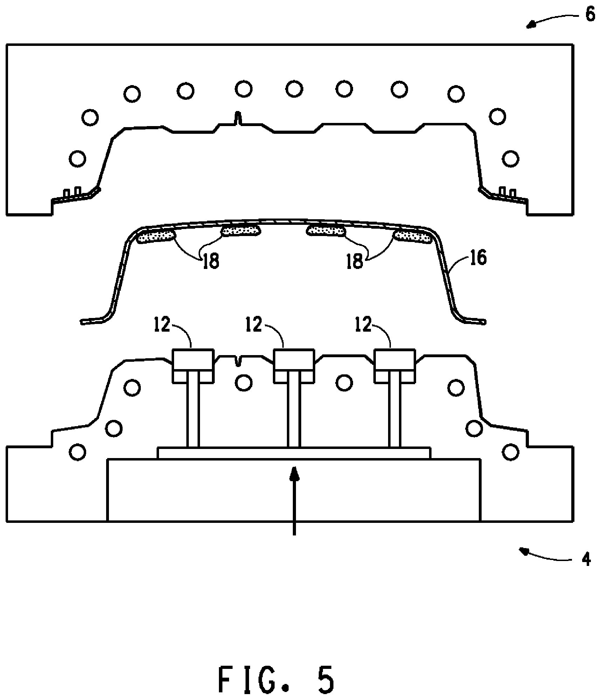

Fig. 5 schematically illustrates a die tool and a pre-formed sheet with overmold material on a surface thereof according to another variant of the invention;

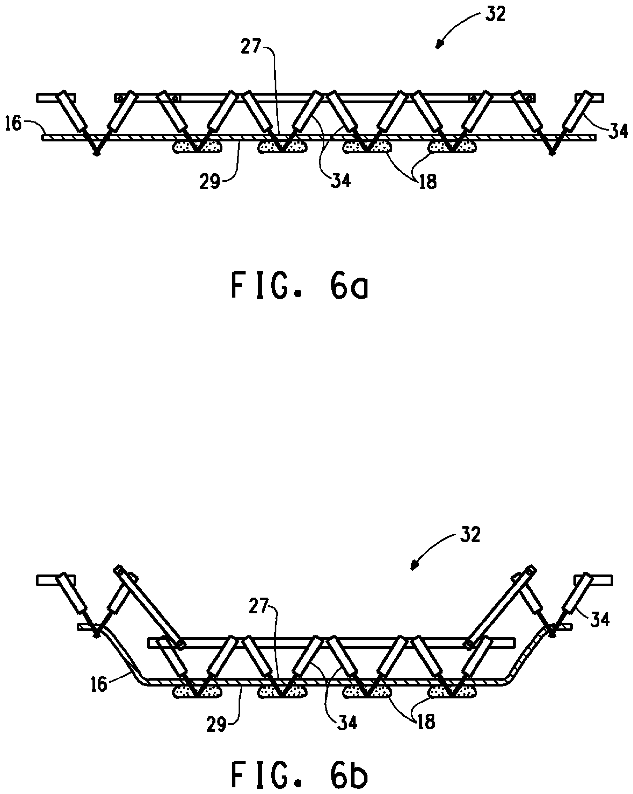

Fig. 6a schematically illustrates a sheet with overmold material positioned on a surface thereof being transported by a transport system, in particular a needle gripper system, according to an embodiment of the invention;
Fig. 6b schematically illustrates the pre-formed sheet with overmold material of Fig. 6a being transported and pre-formed by the transport system.

### Detailed description of embodiments of the invention

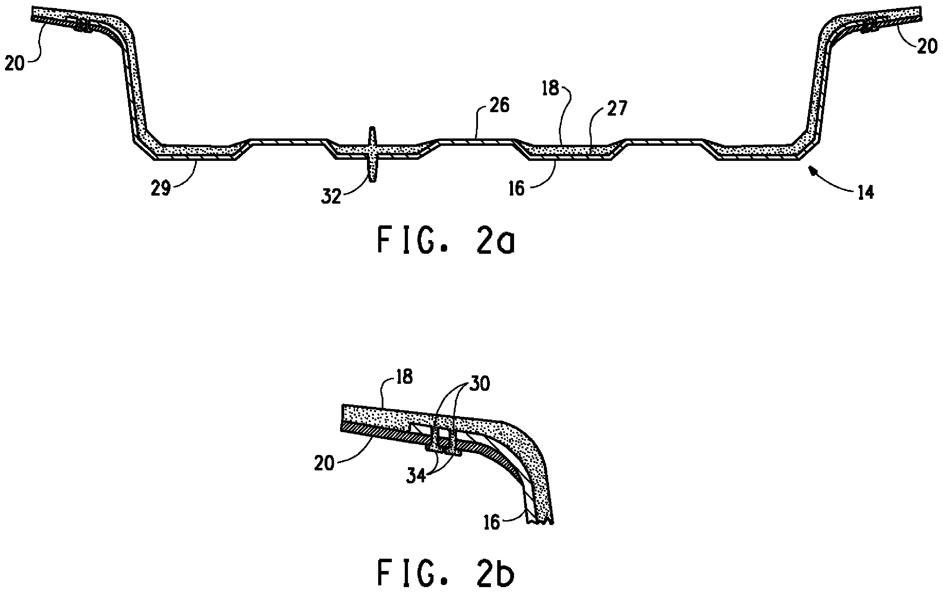

Referring first to Figs 1, 2a, and 2b, a compression overmold die tool 2 according to an embodiment of this invention, comprises a base die 4 and a counter compression die 6. The counter compression die and base die are mountable in a machine to perform a movement towards and away from each other as is per se well-known in the art. The base die and counter compression die each have fixed surfaces 8, 10 that are configured to receive the part to be overmolded there-between and to form the final shape of the overmolded part 14. The die and counter die may further be provided with temperature regulation circuits 7, for example fluid circulation cooling or heating circuits and temperature sensors, for controlling the temperature of the die and of the part to be molded during the overmolding process, as is *per se* also well-known in the art.

Fig. 2a illustrates an example of an overmolded part 14 according to an embodiment of this invention, the example representing a wheel well of an automobile. The compression overmolded part 14 comprises a base element 16 and overmold material 18 disposed on the base element 16. The part may comprise further elements fixed to the base element 16, or integrated thereto by the overmold material 18. The base element 16 may be made of a single integrated part, or of a plurality of parts that are fixed together, for example by welding, riveting, bonding, or by many various known mechanical fixing means. It may also be noted that one insert 20 or a plurality of inserts may be incorporated in the part. The base element 16 may advantageously be in the form of a pre-formed part made of a sheet material or similar, whereby the base element may be made of a polymer, composite material, or stamped and formed sheet metal. In the exemplary application illustrated, the base element 16 is formed of a composite material, advantageously comprising a fibrous material selected from non-woven structures, textiles, fibrous battings and combinations thereof, said fibrous material being impregnated with a thermoplastic material comprising one or more polyamides. For purposes herein, "a fibrous material being impregnated with a thermoplastic material" means that the thermoplastic material encapsulates and embeds the fibrous material so as to form an interpenetrating network of fibrous material substantially surrounded by the thermoplastic material. For purposes herein, the term "fiber" is defined as a, macroscopically homogeneous body having a high ratio of length to width across its cross-sectional area perpendicular to its length. The fiber cross section can be any shape, but is typically round, or near round.

The fibrous material may be in any suitable form known to those skilled in the art and is preferably selected from non-woven structures, textiles, fibrous battings and combinations thereof. Non-woven structures can be selected from random fiber orientation or aligned fibrous structures. Examples of random fiber orientation include without limitation chopped fiber and continuous fiber which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combination thereof.

The fibrous material can be continuous or discontinuous in form. Depending on the end-use application of the composite structure and the required mechanical properties, more than one fibrous materials can be used, either by using several same fibrous materials or a combination of different fibrous materials, i.e. the composite structure described herein may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the composite structure thus leading to improved mechanical properties. The fibrous material may be made of any suitable material or a mixture of materials provided that the material or the mixture of materials withstand the processing conditions used during impregnation by the thermoplastic material.

Preferably, the fibrous material is made of glass fibers, carbon fibers, aramid fibers, graphite fibers, metal fibers, ceramic fibers, natural fibers or mixtures thereof; more preferably, the fibrous material is made of glass fibers, carbon fibers, aramid fibers, natural fibers or mixtures thereof; and still more preferably, the fibrous material is made of glass fibers, carbon fibers and aramid fibers or mixture mixtures thereof. As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures or combinations thereof, wherein said structures are made of glass fibers and wherein the glass fibers are E-glass filaments with a diameter between 8 and 30 µm and preferably with a diameter between 10 to 24 µm.

The fibrous material may be a mixture of a thermoplastic material and the materials described above, for example the fibrous material may be in the form of commingled or co-woven yarns or a fibrous material impregnated with a powder made of the thermoplastic material or a monomer or partially polymerized monomer that can be reacted into a thermoplastic material that is suited to subsequent processing into woven or non-woven forms, or a mixture for use as a uni-directional material.

Preferably, the ratio between the fibrous material and the polymer materials, i.e. the thermoplastic material is at least 15% and more preferably between 40 and 60%, the percentage being a volume-percentage based on the total volume of the composite structure.

The thermoplastic material comprises one or more thermoplastic materials including but not limited to polypropylene, polyamide, thermoplastic polyesters including polybutylene terephthalate, polyethylene terephthalate, thermoplastic elastomers, polyphenylene sulfide, and polyetherimide.

Preferably, the thermoplastic material comprises one or more polyamides. Polyamides are condensation products of one or more dicarboxylic acids and one or more diamines, and/or one or more aminocarboxylic acids, and/or ring-opening polymerization products of one or more cyclic lactams. The one or more polyamides are independently selected from fully aliphatic polyamide resins, semi-aromatic polyamide resins and mixtures thereof.

Said material is of low density relative to steel or aluminum and offering a required structural rigidity, yet is easily formable.

The overmold material 18 may be any formable material adapted for compression overmolding, in particular polymeric materials including but not limited to polypropylene, polyamide, polyester, polyphenylene sulfide, polyetherimide, and aliphatic or partially aromatic polyamides. Examples of overmolding materials include but are not limited to: short fiber reinforced injection molding pellets that are supplied pre-compounded, long fiber reinforced injection molding pellets that are supplied pre-compounded, use of concentrate systems where long fiber reinforced injection molding pellets are diluted and mixed with a second similar matrix material to adjust the fiber volume fraction, and preferably the use of in-line compounding technology where either prechopped or continuous fibrous rovings are fed into a compounding unit with the one or more thermoplastic matrix materials, preferentially polyamides as described above and preferentially glass fibers or carbon fibers.

In an advantageous embodiment, the overmold material is glass fiber reinforced polyamide with 15 to 60% by mass of glass fiber which advantageously provides structural rigidity to the base element as well as good sound dampening properties. The combination of the sheet and over-molding materials enables such polymeric materials to be used in structural applications, for example with the sheet material providing an increased local part stiffness and strength as may be required in a crash or impact situation, and will also favorably modify the Eigen Frequencies of such applications to control noise vibration harshness in the vehicle. Said sheet material also offers increased fatigue resistance and creep performance which is advantageous in applications that are subject to high or alternating stresses such as are found in structural applications.

In the illustrated example, the insert 20 comprises a frame, in particular a frame of stamped and formed sheet metal that allows the part to be welded to other structural sheet metal elements, for instance to weld the wheel well to metal bodywork of a vehicle. This enables assembly of the component to a vehicle body-in-white before passing through the e-coat or electrodeposition process. The frame insert 20 may also provide overall structural rigidity and strength to the part.

The die tool 2 further comprises at least one active core 12, the active core 12 being mounted in a body 9 of one of the dies and relatively movable with respect to the body. In the example illustrated, the active core is mounted in the compression die 6. The active core 12 may be displaced relative to the die body 9 by hydraulic, pneumatic, mechanical, or electro-mechanical means. Each active core comprises a pressure or clamping surface 24 configured to be pressed against a non-overmold surface portion 26 of the part 14. The profile and shape of the clamping surface 24 conforms to the profile and shape of the corresponding non-overmold surface portion 26, and may be flat as illustrated, with various two-dimensional shapes, or may have various three-dimensional shapes conforming to a three-dimensional non-overmold surface. The active core clamping surface 24 is configured to define the surface portion 26 that does not receive any overmold material. In this regard, the clamping surface 24 of the active core does not need to press against the entire non-overmold surface portion 26, as long as a peripheral portion of the core clamping surface 24 sealingly encircles the non-overmold surface portion 26 when pressed against the base element 16 to prevent overmold material flowing onto the non-overmold surface. The one or more active cores 12 may thus be provided with different shapes, sizes and surface patterns in order to define the pattern of overmolded surface area and non-overmolded surface area on the base element in various two-dimensional and three-dimensional patterns. The non-overmold surface portion may form an island on the base element surface completely surrounded by overmold material, or may be positioned proximate an edge of the base element and be only partially surrounded by overmold material.

With the process and die tool according to the invention, overmold material 18 may be positioned on the base element 16 there where it is required for the desired properties of the overmolded part 14, that may include structural rigidity, sound or vibration dampening, integrating sealing, integrating attachment points, thermal insulation, surface profiling, surface frictional properties, and so on. With the process and die tool according to the invention, the overmold material 18 can be placed optimally on various portions of the upper-side surface 27 of the base element 16, there where it is needed, avoiding overmolding of all other surface portions where overmold material is not required. This allows to produce an overmolded part to be produced with increased performance and strength to weight ratio and other desired characteristics, such as optimized resonance frequencies. Also, the part benefits from the advantages that the overmolding process confers, in particular the ability to have long fibers in the overmold material, as compared to an injection molding process.

If a plurality of active cores 12 are provided as shown in the embodiment illustrated, the active cores may be rigidly interconnected and moved simultaneously during the die closing and opening process by a single core displacement mechanism (not shown). Within the scope of the invention, it is also envisaged to have active cores 12 that are separate and moved independently. Also, the active cores may be provided in the compression die 6 as shown in figures 1 to 4, or in the base die 4 as shown in figure 5, or in both the compression die and the base die (not shown). Active cores 12 provided in the base die 4 may be useful for overmold material 18 that is positioned between the base element 16 of part 14 and the base die 4 as shown in figure 5, or for overmold material 18 positioned on the opposing surface of the base element 16 but that flows through orifices provided in the base element to the underside of the base element 16 in a process where both top and bottom surfaces of the base element are overmolded.

As illustrated in Figs 2a and 2b, overmold material may flow through orifices 30 in the base element 16 and other elements, such as the insert 20, to form ribs 32 or molded fixing studs 34, or other integrally molded portions on the underside underside surface 29 of the part 14.

Referring to Figs 3a to 3g, a process of overmolding a part according to an embodiment of this invention will now be described. Referring to Fig. 3a, a sheet material is preformed into a shape of overall length or width L2 that allows it to be positioned in the form of the base die 4. Overmold material 18 is deposited on the upper-side surface 27 of the base element 16 at various positions and at predetermined quantities configured to ensure that overmold material flows over all overmolded surface portions of the upper-side surface 27 when the die tool is fully closed. In the embodiment shown in Figs. 3a to 3g the base element is advantageously preformed prior to insertion in the compression die tool.

In certain applications, the base element 16 may be formed from a sheet material made of a polymer and heated to soften the material, the softened sheet material picked up by a transport system 32 such as a robot with needle grippers 34 as schematically illustrated in figures 6a, 6b, or with suction pads, and loaded into a pre-form die 36, whereby it drapes into the shape of the pre-form. Alternatively, the base element may be preformed by a stamping die, a rolling die, or any other shape forming machine. Yet alternatively the softened sheet material picked up by a transport system, for example with needle grippers as schematically illustrated in figure 6a, may be preformed by the shape configurable transport system as illustrated in figure 6b, where at least some of the plurality of needle grippers 34 are relatively movable and positionable with respect to each other. In the latter variant, the preforming can thus be performed simultaneously during the transport of the base element and overmold material from the pick up station to the compression overmold die tool.

The overmold material may be provided as preformed slabs, bricks, ingots or other parts positioned on the surface of the base element, either after the base element is preformed as shown in figure 3b, or on the base element before it is formed, for example as illustrated in figure 6a. The overmold material may be bonded to the base element by the welding of hot overmold material and/or base element material to each other, or by means of an adhesive, or by ultrasound welding, or by mechanical fixing means such as complementary studs or clips on the preformed overmold material and preformed base element. The overmold material may also be poured or injected in molten form on the surface of the base element by a machine fed with raw overmold material. The overmold material may be positioned on an upper-side surface 27 of the base element 16 as illustrated in figures 3b, 3d, or on an underside surface 29 of the base element as illustrated in figures 4, 5, 6a, 6b.

The insert 20 or plurality of inserts may be pre-positioned on the base die 4 as illustrated in figure 3c before the pre-formed part shown in figure 3b is placed in the base die as illustrated in figure 3b. The compression die 6 is then moved relatively towards the base die 4 as shown in figure 3e to a position where the overmold material 18 is not compressed or only lightly touched or compressed such that it does not flow over the non-overmold surface portions 26 as illustrated in figure 3e. The active cores 12, either being already in an open position, or if retracted are then displaced either relative to the die body 9, or by displacement of die body 9 if active cores are already in an open position, until they press against the non overmold surface portions 26 as shown in figure 3f and subsequently the compression die body 9 is moved towards the base die 4 while active cores 12 retract relative to the compression die 6 while remaining static with respect to the base die 4 and element 16. It is advantageous to reset the active cores to the open position at the start of every molding cycle. As the compression die body 9 moves towards the base die 4, the overmold material 18 is compressed and flows to fill in the free spaces within the die tool. At the end of the compression, the compression die 6 and base die 4 may be separated to free the part 14.

The dies may be provided with conventional ejectors (not shown) that push the part 14 off the die part to which it is stuck when the tool opens. In situations where the part sticks to the die with the active cores, the active cores may advantageously also be utilized as ejectors, thus simplifying the die construction.

The dies may further be provided with forming pins or shaping elements relatively movably mounted in the die bodies to shape cavities or recesses within the overmold material, for instance lateral cavities or recesses that cannot be formed by the die surfaces 8, 10.

Referring to figure 4, in this embodiment the overmold material is placed on an underside surface 29 of the base element 16 opposite the upper-side surface 27 against which the active cores 12 are pressed. In this variant, the active cores clamp respective portions of the base element against opposing counter clamping surface portions 31 of the base die 4, where the retracted displacement of the active cores is greater than the depth of the over-mold material such that the over-mold material 18 is not compressed sufficiently to spread laterally onto the counter clamping surface portions 31 before full clamping of the base element by the active cores. A further embodiment consists of generally raised surface portions relative to the surrounding base die surface, the die surfaces being configured such that the overmold material 18 is not compressed sufficiently to spread laterally onto the counter clamping surface portions 31 before full clamping by the active cores. The subsequent closing of the compression die 6 on the base die 4 then deforms the base element 16 towards the base die where it is peripherally sealed by the active cores before the lateral compression of overmold material on the underside surface 29 to fill the remaining volume between the dies 4, 6. The counter clamping surface portions 31 thus define non-overmold surface portions. The base element may comprise orifices that allow overmold material to flow to the opposite side of the base element, and in such case the clamping surfaces of the active cores may also define non-overmold surface portions on the finished part, surrounded by overmold material.

In yet another variant (not shown), overmold material may be placed on both sides of the base element before insertion in the die tool. In the latter variant, both the counter clamping surface portions of the base die and the clamping surface portions of the active cores define non-overmold surface portions surrounded by overmold material.

### Examples of certain process parameters, illustrated for polyamide based materials:

### Pressures:

- pressure of active cores on a thermoplastic reinforced sheet: at least 10 bar, preferably 40bar, up to as much as 250 bar
- general pressure in die tool to make over-mold material flow : around 250 bar

### Temperatures:

- heat thermoplastic sheet material to between 220 and 300 degrees Celsius, potentially as high as 360 degrees Celsius
- same temperatures for the overmold material

Robot picks up materials and transfers to die in less than 20 seconds, preferably less than 15 seconds, for example in approximately 10 seconds to avoid over cooling of the sheet and overmold material

### Materials:

### Examples of Sheet materials:

- woven glass fabric or glass textile or other fibrous battings impregnated with PA (polyamide), 35-70% volume fraction fiber, thickness 0.5 to 5mm, preferentially 1-3mm
- Unidirectional tape planar preform, made of glass fiber or carbon fiber impregnated with polyamide, 35-70% volume fraction fiber thickness of unidirectional preform 0.5 to 5mm, preferentially 1-3mm
- fibers preferably glass and/or carbon but may also include aramid fibers.
- most preferred is woven glass fiber PA sheet 1 mm thick, 4/1 weave

### Examples of Overmold material:

- glass or carbon fiber reinforced PA pellets, long fiber pellets and short fiber pellets, also directly compounded material
- advantageous is in-line compounded glass fiber / PA, with 15-60% Mass fraction of glass

The composite structures and overmolded composite structures described herein may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices. Components of particular interest are those that are desired to be assembled (for example by welding encapsulated metal inserts) to a master structure, for example an automotive body-in-white structure, before the e-coat process and to hence be capable of passing through the e-coat process.

Examples of automotive applications include without limitation spare wheel wells, floor pans or floor pan sections, integrated structural covers and support brackets for compressed natural gas tanks, liquid propane gas tanks, or hydrogen tanks, seating components and seating frames, engine cover brackets, engine cradles, suspension arms and cradles, chassis reinforcement, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames, and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

## Claims

1. Compression overmolding process comprising the steps of :
- placing overmold material (18) on a base element (16);
- placing said base element with overmold material positioned thereon in a base die (4) of a compression die tool (2);
- moving a counter compression die (6) of the compression die tool (2) towards the base die;
- prior to fully closing the compression die tool, actively moving at least one active core (12) comprising a clamping surface (24) relative to a body (9) of at least one of said base die (4) and counter compression die (6) towards the other of said base die and counter compression die until said clamping surface presses said base element against a counter clamping surface portion of the base die (4), said clamping surface and/or said counter clamping surface portion defining a non-overmold surface portion on the base element (16); and
- subsequently fully closing the counter compression die while maintaining said clamping surface pressing against said base element to form a shape of the overmold material around said non-overmold surface portions on the base element by compression overmolding.

2. Compression overmold process according to claim 1 wherein prior to placing the base element in the base die, the base element is thermally preformed.

3. Compression overmold process according to claim 2 wherein prior to thermally preforming the base element, the overmold material is placed thereon.

4. Compression overmold process according to claim 2 or 3 wherein the preforming of the base element is done by
draping a thermally softened sheet of polymeric material in a preform die or forming a thermally softened sheet of polymeric material by a transport system during transport of the base element from a pick up station to said compression die.

5. Compression overmold process according to any one of the preceding claims wherein placing overmold material on a base element is done by:
bonding pieces of overmold material or pouring molten overmold material or mechanically fixing pieces of overmold material
at least partially on overmold surface portions of the base element.

6. Compression overmold process according to any one of the preceding claims wherein prior to or after placing the base element (16) in the base die (4) but prior to moving the counter compression die of the compression die tool towards the base die, a metal insert (20) is placed on one of the base die (4), the counter compression die (6) or the base element.

7. Compression overmold process according to any one of the preceding claims wherein the overmold material is placed on a side of the base element facing the active cores, or on a side of the base element facing away from the active cores, or on both sides of the base element.

8. Compression overmold process according to any one of the preceding claims wherein the at least one active core is mounted in and moved relative to a body of the counter compression die towards the base die, said clamping surface (24) defining the non-overmold surface portion on the base element.

9. Compression overmolded part (14) made by compression overmolding an overmold material (18) on a base element (16) by a process according to any of claims 1-8, wherein the compression overmold part comprises non-overmold surface portions (26) surrounded by overmolded surface portions (27).

10. Compression overmolded part according to claim 9 wherein the base element comprises a sheet of thermally formable polymer material, optionally reinforced with fibers.

11. Compression overmolded part according to any one of claims 9,10 wherein compression overmolded part comprises an insert of metal material at least partially fixed to the base element by the overmold material.

12. Compression overmold part according to claim 11 wherein the insert comprises a frame positioned at or proximate an edge of the base element.

13. Compression overmold die tool (2) comprising a base die (4) and a counter compression die (6) mountable in a machine operable to move the dies towards and away from each other, the base die and counter compression die each having surfaces (8, 10) configured to receive a base element (16) therebetween and to form a shape of an overmold material (18) by compression overmolding on the base element, wherein the compression overmold die tool further comprises at least one active core (12) mounted in a body (9) of at least one of the base die and counter compression die, the at least one active core relatively movable with respect to said body and configured and operable to be pressed against said base element prior to full closing of the compression overmold die tool to define at least one non-overmold surface portion on the base element.

14. Compression overmold die tool according to claim 13 comprising a plurality of said active cores that are rigidly interconnected and configured to be moved simultaneously, and
wherein each active core comprises a clamping surface (24) configured to be pressed at least around a peripheral portion of a corresponding said non-overmold surface portion (26) so as to sealingly encircle or cover the non-overmold surface portion when pressed against the base element (16); and wherein at least one of the active cores is further configured to be utilized as an ejector for removing an overmolded part (14) after opening the compression overmold die tool.

## Patentansprüche

1. Verfahren zur Hinterpressformung, umfassend die folgenden Schritte:
- Anbringen von Hinterpressmaterial (18) auf einem Basiselement (16);
- Anbringen des Basiselements mit darauf positioniertem Hinterpressmaterial in einer Basisform (4) eines Pressformwerkzeugs (2);
- Bewegen einer Gegenpressform (6) des Pressformwerkzeugs (2) zu der Basisform;
- vor einem vollständigen Schließen des Pressformwerkzeugs aktives Bewegen von mindestens einem aktiven Kern (12) umfassend eine Einspannfläche (24) in Bezug auf einen Körper (9) von mindestens einer der Basisform (4) und Gegenpressform (6) zu der jeweils anderen der Basisform und Gegenpressform, bis die Einspannfläche das Basiselement gegen einen Gegeneinspannflächenabschnitt der Basisform (4) presst, wobei die Einspannfläche und/oder der Gegeneinspannflächenabschnitt einen nicht-Hinterpress-Flächenabschnitt am Basiselement (16) definiert; und
- anschließend ein vollständiges Schließen der Gegenpressform, während die Einspannfläche gegen das Basiselement gepresst gehalten wird, um eine Form des Hinterpressmaterials um die nicht-Hinterpress-Flächenabschnitte am Basiselement durch Hinterpressformen zu bilden.

2. Verfahren zur Hinterpressformung nach Anspruch 1, wobei vor einem Anbringen des Basiselements in der Basisform das Basiselement thermisch vorgeformt wird.

3. Verfahren zur Hinterpressformung nach Anspruch 2, wobei vor einem thermischen Vorformen des Basiselements das Hinterpressmaterial darauf angebracht wird.

4. Verfahren zur Hinterpressformung nach Anspruch 2 oder 3, wobei das Vorformen des Basiselements durch Drapieren eines thermisch aufgeweichten Blatts aus Polymermaterial in eine Vorform oder Bilden eines thermisch aufgeweichten Blatts aus Polymermaterial durch ein Fördersystem beim Fördern des Basiselements von einer Aufnahmestation zur Pressform erfolgt.

5. Verfahren zur Hinterpressformung nach einem der vorherigen Ansprüche, wobei das Anbringen des Hinterpressmaterial auf einem Basiselement wie folgt erfolgt:
Binden von Teilen aus Hinterpressmaterial, oder
Gießen von geschmolzenem Hinterpressmaterial oder mechanisches Befestigen von Teilen aus Hinterpressmaterial mindestens teilweise an Hinterpress-Flächenabschnitten des Basiselements.

6. Verfahren zur Hinterpressformung nach einem der vorherigen Ansprüche, wobei vor oder nach dem Anbringen des Basiselements (16) in der Basisform (4), aber vor einem Bewegen der Gegenpressform des Pressformwerkzeugs zu der Basisform, ein Metalleinsatz (20) an einem von der Basisform (4), der Gegenpressform (6) oder dem Basiselement angebracht wird.

7. Verfahren zur Hinterpressformung nach einem der vorherigen Ansprüche, wobei das Hinterpressmaterial auf einer Seite des Basiselements gegenüber den aktiven Kernen, oder auf einer Seite des Basiselements, die von den aktiven Kernen weg zeigt, oder auf beiden Seiten des Basiselements angebracht wird.

8. Verfahren zur Hinterpressformung nach einem der vorherigen Ansprüche, wobei der mindestens eine aktive Kern in einem Körper der Gegenpressform montiert wird und relativ dazu zu der Basisform bewegt wird, wobei die Einspannfläche (24) den nicht-Hinterpress-Flächenabschnitt am Basiselement definiert.

9. Hinterpressformungsteil (14), hergestellt durch Hinterpressformen eines Hinterpressmaterials (18) auf einem Basiselement (16) durch ein Verfahren nach einem der Ansprüche 1-8, wobei das Hinterpressformungsteil nicht-Hinterpress-Flächenabschnitte (26) umgeben von Hinterpress-Flächenabschnitten (27) umfasst.

10. Hinterpressformungsteil nach Anspruch 9, wobei das Basiselement ein Blatt aus thermisch formbarem Polymermaterial umfasst, das optional mit Fasern verstärkt ist.

11. Hinterpressformungsteil nach einem der Ansprüche 9, 10, wobei das Hinterpressformungsteil einen Einsatz aus Metallmaterial umfasst, der durch das Hinterpressmaterial mindestens teilweise am Basiselement befestigt ist.

12. Hinterpressformungsteil nach Anspruch 11, wobei der Einsatz einen Rahmen umfasst, der an einem Rand oder in der Nähe eines Rands des Basiselements positioniert ist.

13. Hinterpressformungs-Formwerkzeug (2), umfassend eine Basisform (4) und eine Gegenpressform (6), die in einer Maschine montiert werden können, die in der Lage ist, die Formen zu und weg voneinander zu bewegen, wobei die Basisform und Gegenpressform jeweils Flächen (8, 10) haben, die konfiguriert sind, um ein Basiselement (16) dazwischen aufzunehmen und um eine Form aus einem Hinterpressmaterial (18) durch Hinterpressformen auf dem Basiselement zu bilden, wobei das Hinterpressformungs-Formwerkzeug ferner mindestens einen aktiven Kern (12) umfasst, der in einem Körper (9) aus mindestens einem von der Basisform und Gegenpressform montiert ist, wobei der mindestens eine aktive Kern relativ beweglich in Bezug auf den Körper ist und sowohl konfiguriert als auch betriebsbereit ist, um vor einem vollständigen Schließen des Hinterpressformungs-Formwerkzeugs gegen das Basiselement gepresst zu werden, um mindestens einen nicht-Hinterpress-Flächenabschnitt an dem Basiselement zu definieren.

14. Hinterpressformungs-Formwerkzeug nach Anspruch 13, umfassend eine Vielzahl der aktiven Kerne, die starr untereinander verbunden und konfiguriert sind, um gleichzeitig bewegt zu werden, und
wobei jeder aktive Kern eine Einspannfläche (24) umfasst, die konfiguriert ist, um mindestens einen peripheren Abschnitt eines entsprechenden nicht-Hinterpress-Flächenabschnitts (26) gepresst zu werden, sodass der nicht-Hinterpress-Flächenabschnitt abdichtend umgeben oder abgedeckt ist, wenn er gegen das Basiselement (16) gepresst wird; und wobei mindestens einer der aktiven Kerne ferner konfiguriert ist, um als ein Auswerfer verwendet zu werden, um ein Hinterpressteil (14) nach Öffnen des Hinterpressformungs-Formwerkzeugs zu entfernen.

## Revendications

1. Procédé de surmoulage par compression comprenant les étapes consistant à :
- placer un matériau surmoulé (18) sur un élément formant base (16) ;
- placer ledit élément formant base avec le matériau surmoulé positionné sur celui-ci dans une matrice pour base (4) d'un outil de compression (2) ;
- déplacer une contre-matrice de compression (6) de l'outil de compression (2) en direction de la matrice pour base ;
- préalablement à une étape consistant à former complètement l'outil de compression, déplacer de manière active au moins un poinçon actif (12) comprenant une surface de calage (24) par rapport à un corps (9) constitué d'au moins une parmi lesdites matrice pour base (4) et contre-matrice de compression (6) vers l'autre parmi lesdites matrice pour base et ladite contre-matrice de compression jusqu'à ce que ladite surface de calage presse ledit élément formant base contre une partie de contre-surface de calage de la matrice pour base (4), ladite surface de calage et/ou ladite partie de contre-surface de calage définissant une partie de surface non surmoulée sur l'élément formant base (16) ; et
- fermer ensuite complètement la contre-matrice de compression tout en maintenant la pression de ladite surface de calage contre ledit élément formant base afin de donner une forme au matériau surmoulé autour desdites parties de surface non surmoulée sur l'élément formant base grâce à un surmoulage par compression.

2. Procédé de surmoulage par compression selon la revendication 1, dans lequel, préalablement à l'étape consistant à placer l'élément formant base dans la matrice pour base, l'élément formant base est thermiquement préformé.

3. Procédé de surmoulage par compression selon la revendication 2, dans lequel, préalablement à l'étape consistant à préformer thermiquement l'élément formant base, le matériau surmoulé est placé sur celui-ci.

4. Procédé de surmoulage par compression selon la revendication 2 ou 3, dans lequel l'étape de préformage de l'élément formant base est mise en oeuvre grâce à une étape consistant à
draper une feuille thermiquement ramollie de matériau polymère dans une matrice de préformage ou à
former une feuille thermiquement non ramollie de matériau polymère grâce à un système de transport pendant le transport de l'élément formant base depuis une station de prise en charge vers ladite matrice de compression.

5. Procédé de surmoulage par compression selon l'une quelconque des revendications précédentes, dans lequel l'étape de placement du matériau surmoulé sur élément formant base est mise en oeuvre grâce à une étape consistant à :
lier des pièces de matériau surmoulé ou
verser un matériau surmoulé fondu ou fixer de manière mécanique des pièces de matériau surmoulé au moins partiellement sur des parties de surface surmoulée de l'élément formant base.

6. Procédé de surmoulage par compression selon l'une quelconque des revendications précédentes, dans lequel, préalablement à ou postérieurement à l'étape de placement de l'élément formant base (16) dans la matrice pour base (4) mais préalablement à l'étape de déplacement de la contre-matrice de compression de l'outil de compression vers la matrice pour base, un insert métallique (20) est placé sur un(e) parmi la matrice pour base (4), la contre-matrice de compression (6), ou l'élément formant base.

7. Procédé de surmoulage par compression selon l'une quelconque des revendications précédentes, dans lequel le matériau surmoulé est placé sur un côté de l'élément formant base regardant vers les poinçons actifs, ou sur un côté de l'élément formant base regardant dans une direction opposée aux poinçons actifs, ou sur les deux côtés de l'élément formant base.

8. Procédé de surmoulage par compression selon l'une quelconque des revendications précédentes, dans lequel le au moins un poinçon actif est installé dans un corps de la contre-matrice de compression et est déplacé par rapport à celui-ci en direction de la matrice pour base, ladite surface de calage (24) définissant la partie de surface non surmoulée sur l'élément formant base.

9. Pièce surmoulée par compression (14) réalisée grâce à un surmoulage par compression d'un matériau surmoulé (18) sur un élément formant base (16) grâce à un procédé selon l'une quelconque des revendications 1 à 8, dans laquelle la pièce surmoulée par compression comprend des parties de surface non surmoulée (26) entourée par des parties de surface surmoulée (27).

10. Pièce surmoulée par compression selon la revendication 9, dans laquelle l'élément formant base comprend une feuille de matériau polymère thermo-formable, optionnellement renforcée avec des fibres.

11. Pièce surmoulée par compression selon l'une quelconque des revendications 9, 10, dans laquelle la pièce surmoulée par compression comprend un insert en matériau métallique au moins partiellement fixé à l'élément formant base grâce au matériau surmoulé.

12. Pièce surmoulée par compression selon la revendication 11, dans laquelle l'insert comprend un cadre positionné au niveau ou à proximité d'un bord de l'élément formant base.

13. Outil de surmoulage par compression (2) comprenant une matrice pour base (4) et une contre-matrice de compression (6) pouvant être installées dans une machine pouvant servir à déplacer les matrices en direction l'une de l'autre et dans une direction d'éloignement l'une de l'autre, la matrice pour base et la contre-matrice de compression présentant respectivement des surfaces (8, 10) configurées pour recevoir un élément formant base (16) entre celles-ci et pour donner une forme à un matériau surmoulé (18) grâce à un surmoulage par compression sur l'élément formant base, dans lequel l'outil de surmoulage par compression comprend en outre au moins un poinçon actif (12) installé dans un corps (9) constitué d'au moins une parmi la matrice pour base et la contre-matrice de compression, le au moins un poinçon actif pouvant être déplacé de manière relative par rapport audit corps et étant configuré pour, et pouvant servir à, être pressé contre ledit élément formant base préalablement à l'étape de fermeture complète de l'outil de surmoulage par compression, afin de définir au moins une partie de surface non surmoulée sur l'élément formant base.

14. Outil de surmoulage par compression selon la revendication 13, comprenant une pluralité desdits poinçons actifs qui sont interconnectés de manière rigide et sont configurés pour être déplacés simultanément, et
dans lequel chaque poinçon actif comprend une surface de calage (24) configurée pour être pressée au moins autour d'une partie périphérique d'une dite partie de surface non surmoulée (26) correspondante, de manière à encercler ou recouvrir de manière fermée et étanche la partie de surface non surmoulée, lorsqu'elle est pressée contre l'élément formant base (16) ; et dans lequel au moins un des poinçons actifs est en outre configuré pour être utilisé comme éjecteur, afin de retirer une partie surmoulée (14) après ouverture de l'outil de surmoulage par compression.
